# EUROPEAN PATENT APPLICATION

(11) **EP 3 279 646 A1**
(43) Date of publication of application: **07.02.2018**
(21) Application number: 16182794.4
(22) Date of filing: 04.08.2016
(51) Int. Cl.: G01N 21/94

(54) **OPTICAL DETECTION METHOD AND SYSTEM FOR DETECTING A SPATIAL FEATURE ON A SURFACE OF A SUBSTRATE**

(71) Applicant: Nederlandse Organisatie voor toegepast- natuurwetenschappelijk onderzoek TNO, 2595 DA 's-Gravenhage (NL)
(72) Inventor: KOEK, Wouter D., 2595 DA 's-Gravenhage (NL); VAN ZWET, Erwin John, 2595 DA 's-Gravenhage (NL)
(74) Representative: V.O.

(57) **Abstract**

This document relates to an optical detection method and system for detecting a spatial feature on or below a surface of a substrate. The method includes providing, using an optical radiation source, a beam of optical radiation; directing the optical radiation beam using beam-directing optics towards the substrate surface for impinging the optical radiation beam on the surface; receiving, by a focusing objective, a returning portion of the optical radiation that is returned by the substrate surface, said returning portion including a scattered portion that is scattered by the substrate; and providing a reference radiation having an equal phase with the returning portion of the optical radiation. The method further comprises combining a first part of the reference radiation with a first part of the scattered portion for forming a first interference pattern in a first imaging plane, and combining a second part of the reference radiation with a second part of the scattered portion for forming a second interference pattern in a second imaging plane; and prior to said combining, using an optical filter, adding a phase difference to at least one of the second part of the reference radiation or the second part of the scattered portion, for inverting the phase of said at least one of the second part of the reference radiation or the second part of the scattered portion.

## Description

### Field of the invention

The present invention is directed at an optical detection method for detecting a spatial feature on a surface of a substrate, the method including: providing, using an optical radiation source, a beam of optical radiation; directing the optical radiation beam using beam-directing optics towards the substrate surface for impinging the optical radiation beam on the surface; receiving, by a focusing objective, a returning portion of the optical radiation that is returned by the substrate surface; and providing a reference radiation. The invention is further directed at an optical detection system for detecting a spatial feature on a surface of a substrate.

### Background

The present document relates to optical detection of very small structures on a smooth surface, e.g. surface defects or particle contaminations on the surface of a substrate. Defects and small particle contamination of wafers and masks has always been an issue in lithography systems. With the reduction in feature sizes over the years, preventing the presence of smaller particles and defects becomes increasingly relevant. In the near future, with transition to transistors such as FinFET, gate-all-around silicon nanowire FET and 3D NAND memory with critical dimensions smaller than 10 nm, particles of 10 nm and even smaller may become killer defects and have to be detected. However, currently no measurement tool exists to reliably scan masks or wafers on the presence of particles or other defects that are smaller than 20 nm within in a reasonable amount of time.

Traditionally, (dark field) imaging based, particle detection systems relied on identifying a particle based on its irradiance. Dark field imaging in this respect has an advantage over bright field imaging, in that it is based on the principle that particles and defects are more easy to distinguish by considering only the scattered portion of radiation. This is because edges and unevenness at a surface will scatter incident radiation more than smooth surfaces. A dark field image typically uses the higher order diffracted portions of radiation returned by a surface, i.e. the scattered portion of radiation, which contains the radiation scattered by the edges and unevenness. Hence, a particle contamination will also be more easy to detect by means of dark field imaging.

However, also dark field imaging has its limitations in what level of detail may still be resolvable. As long as a particle is very large (i.e. larger than the wavelength that is used to observe it), and the substrate on which it resides is very smooth (i.e. has an rms surface roughness that is much smaller than the wavelength used), the detection of such a particle presents little challenges. In such a case, if the substrate (with particle) is imaged in a dark field configuration, the particle will distinctively show up as a bright spot against an otherwise dark background. However, as the particle becomes smaller, the amount of light scattered by it rapidly decreases (in the Rayleigh scattering regime the total scattered energy scales with the sixth power of the particle diameter).

The incident light not only scatters from the particle, but also from the substrate (due to its inherent surface roughness). When (coherent) laser light is used, which is typically the case given the need for a high-brightness source, the surface-scattered light will generate a speckle pattern (i.e. a 'granular' pattern where the local irradiance can be many times the average irradiance). When the size of the particle decreases, at some point the particle image's irradiance will become comparable to the average irradiance of the speckle background. Because both the particle image and the speckle size are determined by the numerical aperture of the imaging system, they will not only have similar irradiance but also have identical dimensions. Accordingly, the chance to mistakenly interpret a (bright) speckle as a particle, or vice versa, increases for decreasing particle sizes.

It can be shown that for a very smooth wafer with 0.1 nm surface roughness (rms) dark field imaging techniques result in a particle detection limit that enables to resolve particles that are at least 20 nm. In other words, particles smaller than this limit cannot be detected using these traditional methods. Other technologies and methods of imaging or detecting very small surface features or particles are available. However, the use of optical methods traditionally provides the advantages of being fast, non-invasive, and being suitable for use in both laboratory and industrial environments.

Although the above outlines the challenge faced with respect to particle and defect detection in lithography systems, it is important to realize that an optical detection method for detecting very small surface features has a broader field of application than only lithography systems.

### Summary of the invention

It is an object of the present invention to provide an optical detection method wherein the abovementioned disadvantages have been obviated, and which allows for detecting very small spatial features on a surface of a substrate.

To this end, there is provided herewith an optical detection method Optical detection method for detecting a spatial feature on or below a surface of a substrate, the method including: providing, using an optical radiation source, a beam of optical radiation; directing the optical radiation beam using beam-directing optics towards the substrate surface for impinging the optical radiation beam on the surface; receiving, by a focusing objective, a returning portion of the optical radiation that is returned by the substrate surface, said returning portion including a scattered portion that is scattered by the substrate; providing a reference radiation having an orthogonal phase with the scattered portion of the returned optical radiation; and further comprising: combining a first part of the reference radiation with a first part of the scattered portion for forming a first interference pattern in a first imaging plane, and combining a second part of the reference radiation with a second part of the scattered portion for forming a second interference pattern in a second imaging plane; and prior to said combining, using an optical filter, adding a phase difference to at least one of the second part of the reference radiation or the second part of the scattered portion, for inverting the phase of said at least one of the second part of the reference radiation or the second part of the scattered portion.

The reference radiation ideally has the same spatial phase profile as the optical radiation provided to the sample. The reference radiation may either be provided by a separate reference beam, or may be obtained by using a specular reflected portion of the returned radiation. In respect of the latter solution, it is to be realized that in a dark field imaging solution the zeroth order returned portion (i.e. the specular reflected portion) is typically removed to use only the scattered portion for imaging. Therefore, this specular reflected portion may advantageously be used to provide the reference radiation. This overcomes having to provide an additional reference beam. Advantageously it is observed that the specular reflected portion of the returned radiation originates from the same optical radiation source, has passed through the same optics and is also reflected from the sample surface as the scattered portion of the radiation that is used for imaging.

Therefore, in accordance with some embodiments, the reference radiation is provided by using a specular reflected portion of the returned portion of optical radiation, and wherein the step of providing the reference radiation includes a step of spatially separating the specular reflected portion from the scattered portion. A spatial filter may for example be used to filter the zeroth order specular reflected portion from the scattered portion.

Underlying the invention is the insight that path length differences caused by surface roughness is much smaller than path length differences caused by particles or surface defects or features, provided that any surface height variation caused by roughness of the surface is much smaller than the typical dimensions of particles, features or defects to be detected. As a result, in optical radiation returned by the surface, the phase difference caused by surface unevenness is small as compared to the phase difference caused by particles or defects which is typically much larger. The invention applies a dark field imaging method wherein reference radiation is used for interfering with a higher order diffracted portion, i.e. a scattered portion, of the returned radiation. In a preferred embodiment, the invention provides a dark field imaging method wherein this reference radiation is the zeroth order diffracted portion, i.e. the specular reflected portion, of the optical radiation returned by the sample surface. This specular reflected portion is used for interfering with a higher order diffracted portion, i.e. a scattered portion, of the returned radiation.

More specific, the phase of the reference radiation or the specular reflected portion used a reference radiation are the same as the phase of the scattered portion. However, the speckle distortion cause by surface roughness adds a very small local disturbance to the phase of the scattered portion. Considering the surface roughness to be much smaller than the wavelength of the optical radation, those disturbance phase components have a phase difference of ±π/2 radians with respect to the phase of the reference radiation.

A first and a second part of the reference radiation or the specular reflected portion are used for providing a first and a second interference pattern with the scattered radiation. By applying an additional phase difference to one of the first or the second parts of the reference radiation or the specular reflected portion, such as to cause the first and second part to have a mutual phase difference of π (or approximately n), the first part will constructively interfere with those fractions of the scattered portion that have a phase difference comprising a component aligned with that first part (this will become more clear by considering a vector illustration of the real and imaginary parts of a complex representation of the radiation phasors). Likewise, those fractions that constructively interfere with the first part of the reference radiation or the specular reflected portion, will destructively interfere with the second part of the specular reflected portion. However, fractions of the scattered radiation having no components aligned with either the first or the second part of the reference radiation or the specular reflected radiation (or only a small, e.g. negligible portion), will not be affected by the interference with the various parts of the reference radiation or the specular reflected portions and will thus be visible with a same intensity in both interference patterns. It may be appreciated that the phase difference between the first part and the second part of the reference radiation or the specular reflected portions may differ from being exactly n, in order to provide sufficient difference in constructive and destructive optical interference in both branches of a measurement.

Therefore, detection of particles, defects and other small features becomes possible by comparing the constructive and destructive interference patterns with each other. For example, differences in optical signal intensity may be detected by comparing the optical signal intensity of each pixel in the first interference pattern with the intensity of the corresponding pixel in the second interference pattern. These differences indicate fractions in the scattered portion of the radiation that have a significant phase difference with other parts of the scattered radiation, thereby revealing locations of defects, particle contaminations or other small features on the surface of the substrate. Moreover, in accordance with some embodiments, a difference image may be formed between the optical signal intensities in the first and second interference pattern to thereby provide an image showing the particle contaminations or defects.

It is to be noted that even structures, layers and density variations that cause reflection of radiation below the surface of the sample can be detected using a method of the present invention. As may be appreciated, also reflections below the surface will provide for a phase difference that in most cases significantly deviates from the phase differences provided by surface roughness that cause speckle in the image. In particular, clear and 'sharp' variations in the refractive index caused by layer interfaces underneath the surface or other structures, will reflect part of the optical radiation that was not reflected at the surface.

Hereinafter, reference will be made often to the specular reflected portion where it is assumed that this, in accordance with a preferred embodiment, is used for providing the reference radiation. As may be appreciated, this may be made possible by separating the specular reflected portion from the scattered portion, such as to enable adding different phase delays or phase differences to the specular reflected and scattered portions of the beam to provide the constructive and destructive interference. One manner of achieving this, in accordance with an embodiment, is by spatially separating the zeroth and higher order diffracted portions of the returned radiation. This is for example possible with a suitable filter, i.e. a spatially discriminating filter, arranged in the Fourier plane of a receiving focusing objective in the light path. Hence, an optical filter may be placed in the Fourier plane (alternatively often referred to as 'back focal plane') to add a phase difference and optionally apply an intensity reduction to a specular reflected portion - without applying such filters or modifiers to any scattered portions. This optical filter, in that case, is applied to a central section of the radiation in the Fourier plane to affect the specular reflected portions. The peripheral area surrounding the central section of the Fourier plane may be left free to allow the radiation in that section of the Fourier plane to pass through unaffected by a filter.

It is in particular the scattered portion that is to be used for obtaining therefrom the information on the searched for details (the particles, defects and other small features). Therefore, it makes most sense, in accordance with embodiments, to apply an optical filter for providing the phase difference for interference to the reference radiation or specular reflected portion instead of to the scattered portion, such as to leave the scattered portion unaltered. However, to obtain constructive and destructive interference between those parts of the scattered radiation having a significant phase difference (significantly different from 0, n or *n**2π radians (with n ∈ N)), it is likewise possible in accordance with some embodiments to add a further phase difference to the scattered portion instead of or in addition to the specular reflected portion. This may reintroduce at least partially the speckle components, but if the further phase difference is carefully selected it may only to a limited extend impact the speckle components. Similar to what is proposed above with respect to spatially filtering in a central section of the Fourier plane, in order to affect scattered portions of the returned optical radiation (in case this may be desired), filtering is to be performed in the peripheral sections surrounding the central section of the Fourier plane.

In addition to the above, an in accordance with some specific embodiments, an amplitude or intensity reducing filter may be used to reduce the intensity of the specular reflected portion or the reference radiation. To prevent excess power in the specular reflected portion of the returned radiation to overpower the scattered portion, to obtain meaningful interference patterns, the (overall) intensity of the specular reflected portions may be reduced to match with the (overall) intensity of the scattered portion. This may be obtained by an additional or integrated filter component to the optical filter, e.g. a separate filter or an additional filtering layer.

Preferably, the optical radiation beam is impinged on the substrate surface in a direction transverse thereto. This is because for a beam that impinges the surface of the substrate under a different angle than perpendicular, oblique impinging of the beam results in a path length difference across the diameter of the beam. As a result, across the beam diameter, there will be a linear gradient in the phase difference of the radiation impinging on (and thus reflected or scattered of) the surface. For a perpendicular beam, this gradient is absent. As may be appreciated, the term 'transverse to' includes a range of angles in addition to being perfectly perpendicular. It could be an angle within a range of 90 degrees ± 10 degrees with the surface, for example; the straight angle (90 degrees) being most preferred in view of the above. It may however be appreciated that, even though the transverse impinging of the optical radiation beam is a preferred embodiment, the invention is not limited to this implementation. It is well possible to perform the method of the present invention using an optical radiation beam that obliquely impinges on the surface. In that event, additional measures may be taken to resolve the above described near gradient in the phase difference of the radiation.

In the following, embodiments are considered wherein a specular reflected portion of the beam is filtered to add a phase difference thereto, for obtaining the first and second interference patterns. A spatial filter is applied in the Fourier plane, as indicated, e.g. in a central section thereof. In accordance with some of these embodiments the optical filter may comprise a birefringent phase mask having a different index of refraction in at least two orthogonal polarization directions, wherein the method further comprises, prior to said impinging on the surface, polarizing the optical radiation beam in a polarization direction at an angle with one of said at least two orthogonal polarization directions. In these embodiments, the polarized optical radiation beam has polarization components in both of the at least orthogonal polarization directions of the phase mask. However, the birefringency of the phase mask causes the phase differences to become different in each orthogonal component of the radiation behind the mask. A birefringent phase mask may for example exist of a crystal having a lattice structure providing a different index of refraction in two (or more) orthogonal directions. This may for example be caused by molecule arrangements in the lattice of the crystal. As a result, and dependent on the dimensions of the crystal and the differences in refractive index in the various directions, a phase difference of n radians may be created between the both polarization components. This may thereafter be used to provide constructive and destructive interference in different branches of an optical system. The skilled person will appreciate that there are other implementations possible for providing modifying a phase differently in different polarization directions.

As may be appreciated, the above described implementation using a birefringent phase mask may also be applied to embodiments using an external reference beam or reference radiation. Hence, in accordance with some embodiments, the optical filter comprises a birefringent phase mask having a different index of refraction in at least two orthogonal polarization directions, the method further comprising passing the scattered portion and the reference radiation through the birefringent phase mask, the method further including polarizing the reference radiation and, prior to said impinging on the surface, the optical radiation beam in a polarization direction at an angle with one of said at least two orthogonal polarization directions.

In accordance with some of these embodiments, the angle between the polarizing direction of the original optical radiation beam and said one of the at least two orthogonal polarization directions of the crystal is between π/8 radians and 3π/8 radians. Preferably this angle is between π/6 radians and π/3 radians, and more preferably between 8π/36 radians and 10π/36 radians. Most preferable, the angle is π/4 radians. At an angle of π/4 radians with the both orthogonal polarization directions, the polarization components in both directions are of same intensity, making it easier to match for example the amplitude of the specular reflected portion in both these directions. It also ensures a same or similar intensity in both interference patterns. The above applies to both the embodiments wherein the reference radiation comes from an external optical source and those wherein the reference radiation is provided by the specular reflected portion.

In accordance with some particular of these embodiments, after said birefringent phase mask, the filtered specular reflected portion is split into said first part and said second part of the specular reflected portion by means of a polarizing beam splitter, wherein the polarizing beam splitter splits the beam into two orthogonal polarization directions, said polarization directions of the polarizing beam splitter corresponding with said at least two orthogonal polarization directions of the birefringent phase mask. The polarizing beam splitter provides a very efficient manner to split the both polarization components to provide interference in two branches, in accordance with the invention.

In accordance with a second aspect of the invention, there is provided an optical detection system for detecting a spatial feature on or below a surface of a substrate, comprising at least one optical radiation source for providing a beam of optical radiation and for providing reference radiation; beam-directing optics for directing the optical radiation beam towards the substrate surface; a focusing objective for receiving a returning portion of the optical radiation returned by the substrate surface, said returning portion including a scattered portion that is scattered by the substrate; and wherein the system is configured for providing the reference radiation having an orthogonal phase with the scattered portion of the returned optical radiation; further comprising: first combining optical elements for combining a first part of the reference radiation with a first part of the scattered portion for forming a first interference pattern in a first imaging plane, and second combining optical elements for combining a second part of the reference radiation with a second part of the scattered portion for forming a second interference pattern in a second imaging plane; and an optical filter, prior to said first and second combining optical elements, for adding a phase difference to at least one of the second part of the reference radiation or the second part of the scattered portion, for inverting the phase of said at least one of the second part of the reference radiation or the second part of the scattered portion.

For providing the reference radiation having an orthogonal phase with the scattered portion of the radiation, the system may be calibrated by adapting the optical path length of the reference radiation such that the phase is orthogonal with the scattered portion. For example, in a dark field imaging set-up, one may form and interference pattern between the reference radiation and radiation scattered from a clean surface creating a speckle pattern. Then, to calibrate the system, one may adapt the optical path length of the reference beam until the interference pattern effectively disappears. As will be appreciated, this will be the case when the phase difference between the scattered portion including the speckle pattern is orthogonal, i.e. equals ±π/2. However, effective reduction of the interference for enabling the detection method to be performed, may already be reached when the phase of the reference beam is near orthogonal, e.g. from ±3π/8 to ±5π/8. Adapting the optical path length may be performed in many different ways, that are available to the skilled person. For example, the path length may be made longer using a mirror system wherein the distance or orientation of mirror may be adapted. Other implementations may add filters or use other optics to achieve this. As explained, specular reflected radiation already has the desired phase difference with respect to the speckle pattern, and thus does not require particular calibration or other measures to achieve this.

As already briefly referred to above, the present method and system may be applied for detecting particle contaminations, e.g. on a smooth wafer surface. In principle, this enables detection of particles having cross-sectional dimensions that are significantly larger than height variations of the smooth surface. For example, for a surface having an root mean square (rms) surface roughness of 0.1 nanometer (nm), detection of particles with a typical cross section of ten times the root mean square (rms) surface roughness (i.e. 10 * rms surface roughness) is possible, thus particles of approximately 1nm or larger. Likewise, detection of other surface features having similar dimensions is possible based on this principle. For this reason, an alternative field of application for the presently described methods and systems may be optical surface microscopy. The 'root mean square' in 'root mean square surface roughness' refers to the quadratic mean of the surface roughness. The root mean square or quadratic mean is defined as the square root of the arithmetic mean of the squares of a set of numbers or measurement values - here being the difference in surface heights caused by height variation due to roughness of (what appears to be) a smooth surface.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1(a) schematic illustration of off-axis dark-field particle-detection system in accordance with the prior art;
Figure 1(b) is an image of an irradiance in the image plane obtained by imaging a section of a wafer using a system in accordance with figure 1(a);
Figure 1(c) image of a phase of an optical signal in the image plane obtained by imaging a section of a wafer using a system in accordance with figure 1(a);
Figure 2(a) schematic illustration of an on-axis illuminated annular-aperture-imaging system;
Figure 2(b) image of an irradiance in the image plane obtained by imaging a section of a wafer using the system of figure 2(a);
Figure 2(c) image of a phase of an optical signal in the image plane obtained by imaging a section of a wafer using the system of figure 2(a);
Figure 3 schematic image of a system in accordance with an embodiment of the invention for performing difference-detection enhanced binary-phase interferometric particle detection;
Figure 4(a) is an image of an irradiance in one of two image planes of a system in accordance with figure 3;
Figure 4(b) is an image of an irradiance in one other of two image planes of a system in accordance with figure 3;
Figure 4(c) is a differential image of the two images of figures 4(a) and 4(b).

### Detailed description

The following is a detailed description of the principles and considerations underlying the ideas, concepts and embodiments described herein.

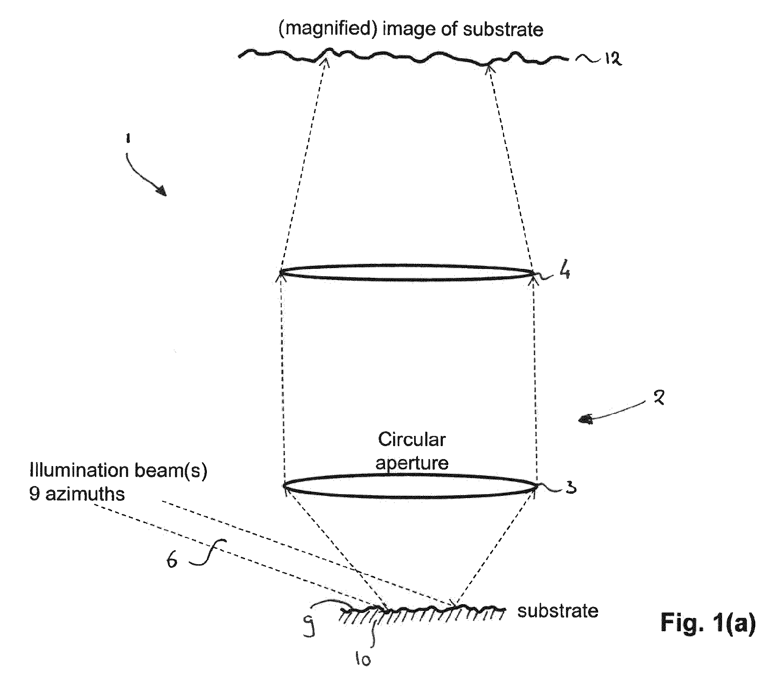

Figure 1(a) shows a conceptual drawing of an off-axis illuminated dark field imaging system 1. As illustrated, the system consists primarily of an optical projection arrangement 2, consisting of focusing lenses 3 and 4. A substrate 10 having a surface 9 to be examined, is illuminated with an incident optical beam 6. Optical beam 6 illuminates the surface 9 under a non-straight angle therewith, i.e. under an angle with both the surface itself and the normal (i.e. transverse direction) to the surface. Preferably, as indicated in figure 1(a), measurements are taken from a plurality of different azimuths in order to suppress speckle in the image. Hence, the measurement may for example be repeated with the beam 6 incident from different (e.g. nine, as in figure 1(a)) azimuthal directions. As may be appreciated, in a different implementation, an optical system may be configured for making the beam incident from a plurality of azimuthal directions simultaneously.

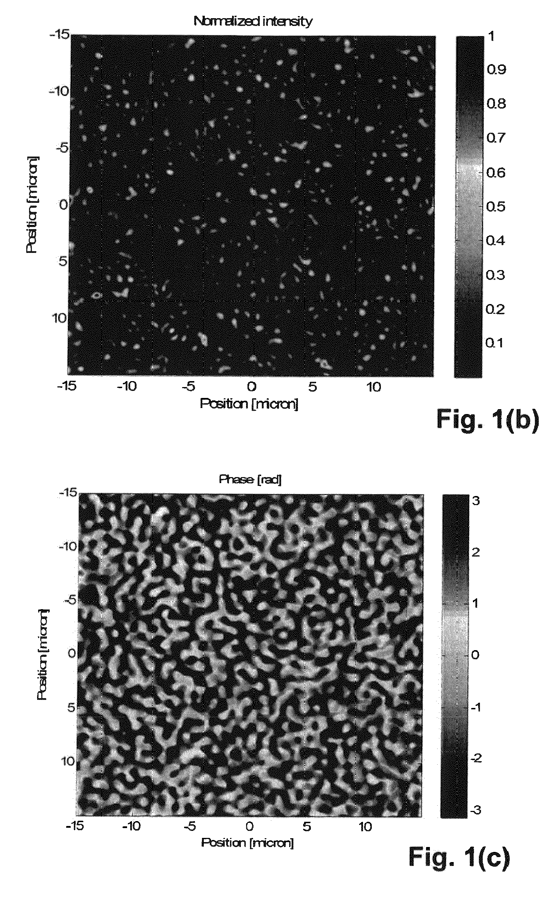

By using an in-house developed numerical wavefront propagation code, based on Fourier optics, the irradiance and phase distribution in the image plane of system 1 have been modelled as illustrated in figures 1(b) and 1(c) respectively. These simulations assume an illuminating wavelength of the beam 6 of 193 nm, a numerical aperture of 0.5, unit magnification, and an rms surface roughness of 0.1 nm. Throughout the analyses numerically generated surfaces were used. Figure 1(b) shows the (peak-normalized) irradiance of the wavefront in the image plane, whereas Figure 1(c) shows its phase. It is important to note that the phase is more or less constant within a single speckle, but has uniformly distributed random values over the various speckles. This is due to the fact that in the imaging method schematically illustrated in figure 1(a) the incident beam impinges on the surface obliquely under a certain (non-perpendicular) angle. As a result, the path length difference of incident radiation across the irradiated area on surface 9, immediately prior to the radiation of beam 6 hitting the surface, changes with a gradient that is dependent on the angle of incidence. As may be appreciated, the radiation at the right side of the surface 9 in figure 1(a) has travelled a longer distance from the optical source than as the radiation on the left side of the surface 9 in figure 1(a). In addition thereto, local height differences cause by any roughness of the surface adds a random minor positive or negative contribution thereto. This results in the typical phase distribution illustrated in figure 1(c) in the scattered radiation caused by speckle (to this end, it is noted that the figure 1(c) is originally only available in full colour, and for the purpose of this document, a black-and-white version thereof was included which makes the random phase variation less clear).

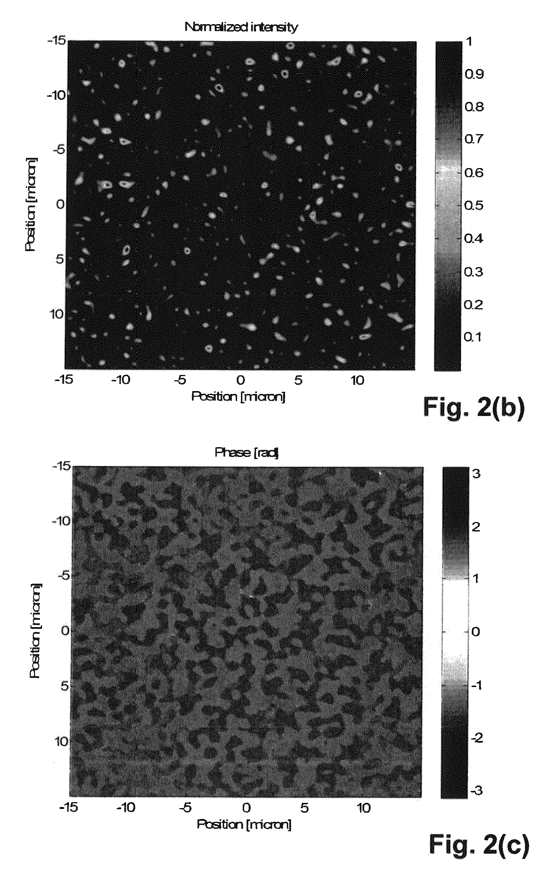

Figure 2(b) illustrates an on-axis dark field imaging system wherein the beam 6', via a mirror or prism 15, is impinged on the surface 9 under a straight angle therewith. The on-axis portions of returned radiation, i.e. the specular reflected portions, are blocked by the annular aperture 17. The annular aperture 17 comprises a central portion 18 that blocks the radiation, and an annular portion 19 that is transparent to the radiation. Upon impinging on the surface 9, all radiation in the beam 6' has travelled a same path length as from the optical source (not shown), hence there is no angle dependent gradient across the illuminated area of the surface 9 of substrate 10.

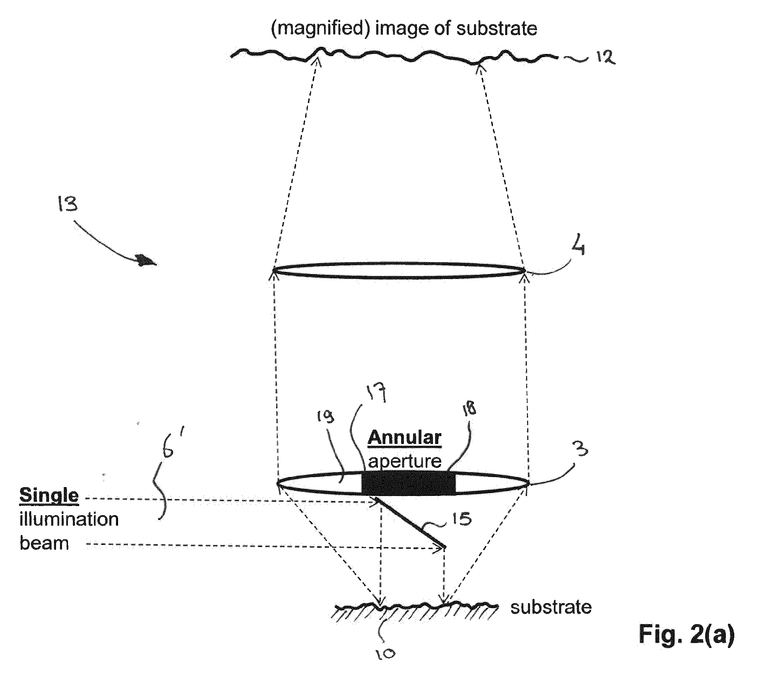

As illustrated in figures 2(a) to (c), the angle dependent gradient in the path length difference becomes zero in case the incident illumination beam impinges on the surface under a straight angle therewith. The phase difference in scattered radiation that origins from speckle is in that case only determined by the local height differences caused by surface roughness of surface 9. The scattered radiation part, without the specular reflected part, may be made visible using an on-axis illuminated annular-aperture-imaging system 13 as illustrated schematically in figure 2(a). The numerical wavefront propagation simulations of figures 2(b) and (c) are based on an annular imaging numerical aperture of 0.23-0.5. Figure 2(b) shows the (peak-normalized) irradiance of the wavefront in the image plane, whereas Figure 2(c) shows its phase. In this particular illumination and imaging configuration, and for a surface roughness much smaller than the wavelength, there are only two distinct phase components present in the image. Moreover, those phase components have a phase difference of ±π/2 radians with respect to the phase of the specular reflection.

However, as may be appreciated, the phase difference in the scattered radiation caused by speckle is perceived as binary primarily due to the fact that the path length differences caused by roughness are only small (<<λ, X being the wavelength of incident radiation) and either positive or negative. In fact, the surface roughness of surface 9 adds a very small positive or negative contribution to the path length or each incident fraction of radiation. The contribution is so small, that the phases of different radiation fractions scattered from various parts of the surface are only slightly different from the average phase of the scattered radiation. Thus, considering the phase as a vector having a real and imaginary part, a very small phase fraction of ±π/2 radians is added, but the phase of the scattered radiation on average remains unchanged and only slightly varies locally due to speckle. This is made visible in figure 2(c), which shows that the phase across the illuminated area has a binary value, in fact thus being pseudo binary in the sense that the real differences are to small to be made visible.

In the event of any larger path length differences, e.g. caused by particle contaminations of a particle of - say - 15nm in diameter, the phase difference will typically be much different. The contribution to the path length difference caused by the particle is substantial, when compared to that of speckle. Hence, radiation scatter by a particle may have a phase that is much different than the average phase of the radiation coming from the sample. In the present invention, this characteristic is used to discriminate between radiation scattered by a particle and radiation scattered by speckle.

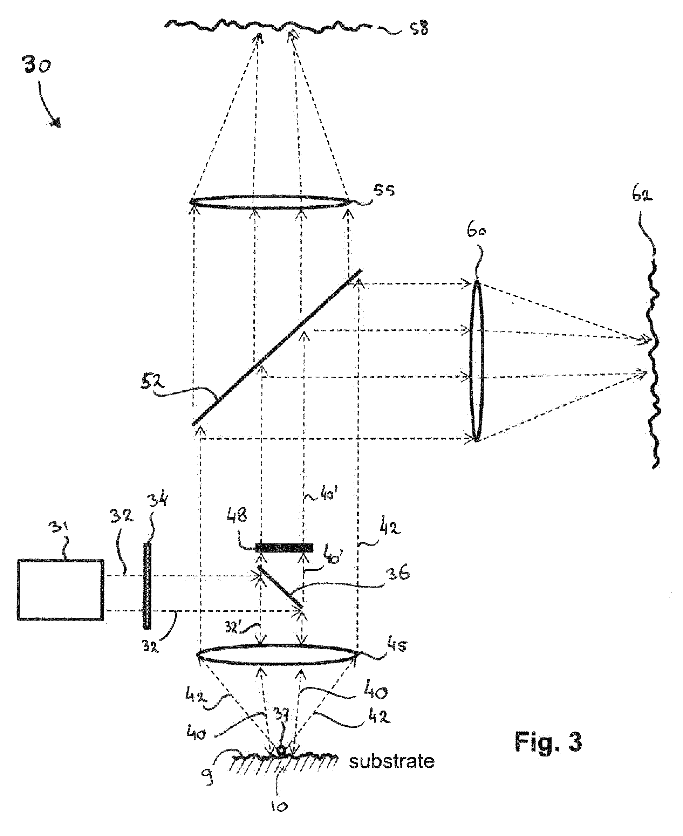

A conceptual implementation of a system 30 for difference-detection enhanced binary-phase interferometric particle detection in accordance with embodiments of the invention is shown in Figure 3. This particular embodiment has the (stability) benefits of a common-path interferometer. An optical source 31 providing a beam 32 of monochromatic radiation. A linear polarizer 34 polarizes the beam 32 which is incident on half-mirror 36. The linear polarizer 34 provides a polarization of π/4 radians (45°; 45 degrees) with the polarization directions of polarizing beam splitter 52 to be discussed further below. The half mirror 36 redirects the beam 32 such that a fraction 32' of the radiation from beam 32 is reflected to be redirected on-axis, i.e. in a transverse direction, to the surface 9 (note that the fraction transmitted by the half mirror 36 is not considered, in order not to obscure the present description). On the surface 9 of the substrate 10, an unwanted contamination particle 37 is present.

The radiation 32' impinging on surface 9 of the substrate 10 (e.g. a wafer or other substrate), is partially specular reflected and partially scattered by the surface 9. The specular reflected portion 40 is returned by the surface (reflected) on-axis. The scattered portion 42, being the radiation of higher diffraction order, typically has a larger exit angle with respect to the surface. Therefore, the lens 45 at the periphery thereof will receive the scattered fraction 42, whereas the specular reflected fraction 40 is mostly concentrated in the central part of the lens 45.

Behind the lens 45, the half mirror 36 will pass through a fraction 40' being half of the specular reflected portion 40 without changing the direction thereof (the other half of the specular reflected portion 40 that is redirected by the half mirror 36, will not be considered in order not to obscure the explanation). Moreover, behind the lens 45, all of the scattered portion 42 will pass through towards the analysis system, without encountering half mirror 36 on it's path, because half mirror 36 only affects the central portion of the radiation transmitted by lens 45. The fraction 40' of the specular reflected portion 40 transmitted by half mirror 36, falls onto a birefringent phase mask 48 located in the Fourier plane behind lens 45. A birefringent phase mask is an optical element that affects the phase of different polarization directions of a beam differently. For example, the birefringent phase mask 48 may be a crystal having a lattice structure such that the index of refraction is different in two orthogonal polarization directions. As may be appreciated, instead of the birefringent phase mask 48, other solutions may be used for providing a different phase component to two orthogonal polarization directions of fraction 40'. The birefringent phase mask 48 is located in the Fourier plane of lens 45 to affect primarily the fraction 40' of the specular reflected portion 40 (and minimally - preferably not at all - the scattered portion 42). In the embodiment illustrated in figure 3, the two orthogonal polarization directions of birefringent phase mask 48 are aligned with the polarization directions of polarizing beam splitter 52 discussed further below, hence being at π/4 radians (45°; 45 degrees) with the polarization direction of linear polarizer 34. Therefore, behind the birefringent phase mask 48, the specular reflected portion 40' in each of the two orthogonal polarization directions has a different phase. This phase difference can be chosen, e.g. dependent on the thickness of the mask 48 or the kind of material thereof.

The fraction 40' of specular reflected radiation and the scattered portion 42 are then incident on polarizing beam splitter 52, splitting the incident radiation into the two orthogonal polarization directions aligned with those of the birefringent phase mask 48. One of the polarization directions is transmitted to lens 55 and image plane 58. The other one of the polarization directions is redirected by the polarizing beam splitter 52 to lens 60 and image plane 62. The optical radiation received in each of the image planes 58 and 62 is recorded for analysis by a control and analysis system (not shown).

Due to the fact that illumination beam 32, by passing through polarizer 34, has a linear polarization that is rotated π/4 radians (45°; 45 degrees) with respect to the polarization directions of polarizing beam splitter 52, the radiation in fraction 40' and scattered portion 42 has components of equal intensity in each two polarization directions of the splitter 52. Therefore, this results in a 50%-50% split on the polarizing beam splitter 52. The mask 48 in the Fourier plane is birefringent to allow the two orthogonal polarization components (matching those of the polarizing beam splitter) to experience a difference path length. In particular, and most preferred, the mask adds an optical path length difference such as to add a phase difference of ±π/2 (or other significant non-zero value) equally to both polarization directions, whilst adding an additional phase difference of n (or close to n) radians to one of the two polarization directions. Hence, the phase difference induced by the mask 48 between the two orthogonal polarization directions is n (or close to n) radians, but both polarization directions also have a π/2 (or other significant non-zero value) radians phase difference with the scattered portion 42. The phase mask 48 thus allows to add a phase difference to one of the both polarization components for obtaining constructive and destructive interference.

Consequently, due to splitting by splitter 52, two images of the substrate are formed that correspond to the two polarization directions of the splitter 52. The specular reflected radiation from fraction 40' is used as reference beam 44, which due to the splitter 52 falls apart into a first part 44-1 and a second part 44-2 corresponding to the two respective polarization directions. By the phase mask 48, the relative phases of the reference beam parts 44-1 and 44-2 can be chosen freely.

Hence, the first part 44-1 can be made to provide constructive interference with any radiation that has e.g. a ±π/2 phase difference with the average phase of the scattered radiation, whereas the second part 44-2 can be made to provide destructive interference with any radiation that has e.g. a ±π/2 phase difference with the average phase of the scattered radiation. This will result in those fractions having a ±π/2 phase difference with the average phase of the scattered radiation 42 to be amplified due to constructive interference in the first image plane 58 and diminished or suppressed due to destructive interference in the second image plane 62. On the other hand, radiation that is more or less aligned in phase with the average phase of the scattered portion 42 will not really be affected the interference, and will thus have an equal intensity in both image planes 58 and 62. This can be used to filter out the unwanted parts of the radiation, such as to only yield the radiation having a significant enough phase difference component of ±π/2 radians, e.g. radiation from contamination particles.

In figure 3, the particle 37 on the surface 9 of the substrate 10 will scatter the radiation with a significant path length difference as compared to radiation scattered from the surrounding area of particle 37. Such radiation typically also has a significant component having a phase difference of ±π/2 radians with that surrounding radiation. At least, the phase difference is typically far more significant that the phase difference created by speckle. As a result, therefor the radiation scattered from particle 37 will be much more affected by the constructive/destructive interference in image planes 58 and 62, than the radiation scattered by the surrounding area of the particle. By subtracting, for example, the image from image plane 62 from the image of image plane 58, the speckle related portions that are not affected by the interference will cancel out against each other. However, those parts that are affected by the interference, such as the radiation from the particle 37, will not cancel out and will be well visible in the resulting image.

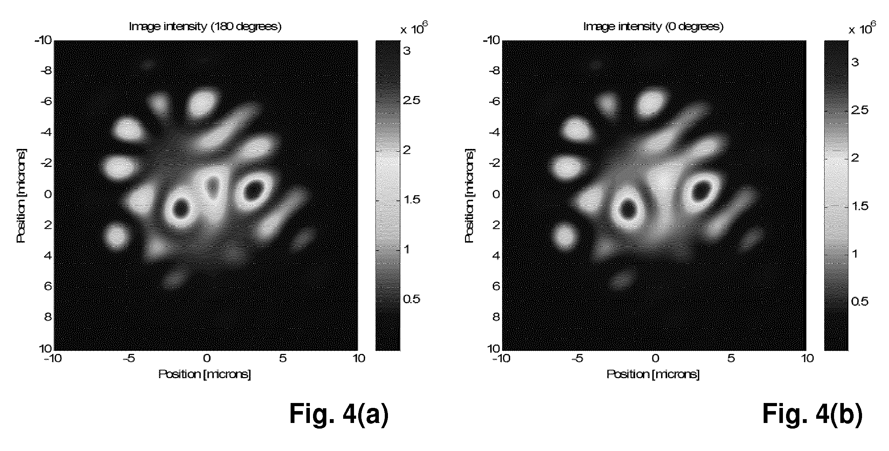

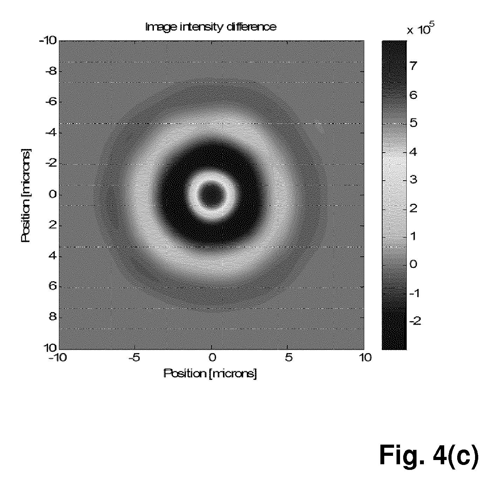

The resulting images in the image planes 58 and 62, and the difference image obtained by subtracting, are illustrated in figures 4(a), 4(b) and 4(c). Figure 4(a) shows the image from image plane 58. Figure 4(b) shows the image from image plane 62. In both images of figures 4(a) and 4(b), a pattern is visible that as it appears may represent structures or particles, but that may as well represent speckle. From the figures 4(a) and 4(b) this is impossible to tell. However, if one of these images is subtracted from the other, the differential image of figure 4(c) is obtained. In figure 4(c), the particle 37 is very well visible.

There are obviously different implementations (e.g. not involving birefringence and polarization-based splitting) that allow to obtain the phase-shifted reference beams desired for constructive and destructive interference. For example, instead of the birefringent phase mask 48, it may also be possible to add a regular phase mask in (one or both of) the Fourier planes behind lenses 55 and 60 to add a phase difference to only the reference beam parts 44-1 and 44-2.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

## Claims

1. Optical detection method for detecting a spatial feature on or below a surface of a substrate, the method including:
providing, using an optical radiation source, a beam of optical radiation;
directing the optical radiation beam using beam-directing optics towards the substrate surface for impinging the optical radiation beam on the surface;
receiving, by a focusing objective, a returning portion of the optical radiation that is returned by the substrate surface, said returning portion including a scattered portion that is scattered by the substrate;
providing a reference radiation having an orthogonal phase with the scattered portion of the returned optical radiation; and
further comprising:
combining a first part of the reference radiation with a first part of the scattered portion for forming a first interference pattern in a first imaging plane, and combining a second part of the reference radiation with a second part of the scattered portion for forming a second interference pattern in a second imaging plane; and
prior to said combining, using an optical filter, adding a phase difference to at least one of the second part of the reference radiation or the second part of the scattered portion, for inverting the phase of said at least one of the second part of the reference radiation or the second part of the scattered portion.

2. Method according to claim 1, further comprising analyzing the first interference pattern and the second interference pattern for obtaining a differential image representing a difference between the first and second interference pattern.

3. Method according to any of the preceding claims, wherein the optical radiation beam is impinged on the substrate surface in a direction transverse thereto.

4. Method according to any of the preceding claims, wherein the reference radiation is provided by using a specular reflected portion of the returned portion of optical radiation, and wherein the step of providing the reference radiation includes a step of spatially separating the specular reflected portion from the scattered portion.

5. Method according to claim 4, wherein the optical filter comprises a birefringent phase mask having a different index of refraction in at least two orthogonal polarization directions, the method further comprising passing the scattered portion and the specular reflected portion through the birefringent phase mask, wherein the method further includes, prior to said impinging on the surface, polarizing the optical radiation beam in a polarization direction at an angle with one of said at least two orthogonal polarization directions.

6. Method according to any of the claims 1-3, wherein the optical filter comprises a birefringent phase mask having a different index of refraction in at least two orthogonal polarization directions, the method further comprising passing the scattered portion and the reference radiation through the birefringent phase mask, the method further including polarizing the reference radiation and, prior to said impinging on the surface, the optical radiation beam in a polarization direction at an angle with one of said at least two orthogonal polarization directions.

7. Method according to claim 5 or 6, wherein the angle of the polarization direction is between π/8 radians and 3π/8 radians, preferably between π/6 radians and π/3 radians, more preferably between 8π/36 radians and 10π/36 radians, or even more preferably wherein the angle is π/4 radians.

8. Method according to any of claims 5-7, wherein after said birefringent phase mask, the filtered specular reflected portion is split into said first part and said second part of the specular reflected portion by means of a polarizing beam splitter, wherein the polarizing beam splitter splits the beam into two orthogonal polarization directions, said polarization directions of the polarizing beam splitter corresponding with said at least two orthogonal polarization directions of the birefringent phase mask.

9. Optical detection system for detecting a spatial feature on or below a surface of a substrate, comprising
at least one optical radiation source for providing a beam of optical radiation and for providing reference radiation;
beam-directing optics for directing the optical radiation beam towards the substrate surface;
a focusing objective for receiving a returning portion of the optical radiation returned by the substrate surface, said returning portion including a scattered portion that is scattered by the substrate; and
wherein the system is configured for providing the reference radiation having an orthogonal phase with the scattered portion of the returned optical radiation;
further comprising:
first combining optical elements for combining a first part of the reference radiation with a first part of the scattered portion for forming a first interference pattern in a first imaging plane, and second combining optical elements for combining a second part of the reference radiation with a second part of the scattered portion for forming a second interference pattern in a second imaging plane; and
an optical filter, prior to said first and second combining optical elements, for adding a phase difference to at least one of the second part of the reference radiation or the second part of the scattered portion, for inverting the phase of said at least one of the second part of the reference radiation or the second part of the scattered portion.

10. Optical detection system according to claim 9, further comprising a controller including a processor configured for analyzing the first interference pattern and the second interference pattern for obtaining a differential image representing a difference between the first and second interference pattern.

11. Optical detection system according to any of the claims 9-10, wherein the system is arranged for providing the reference radiation by using a specular reflected portion of the returned portion of optical radiation, and wherein for providing the reference radiation the system includes a spatial filter for spatially separating the specular reflected portion from the scattered portion.

12. Optical detection system according to claim 11, wherein the optical filter comprises a birefringent phase mask having a different index of refraction in at least two orthogonal polarization directions, and wherein the system further comprises a polarizing filter arranged in the optical radiation beam prior to said impinging thereof on the surface, for polarizing the optical radiation beam in a polarization direction at an angle with one of said at least two orthogonal polarization directions of the birefringent phase mask.

13. Optical detection system according to claim 9 or 10, wherein the optical filter comprises a birefringent phase mask having a different index of refraction in at least two orthogonal polarization directions, and wherein the system further comprises a first polarizing filter for polarizing the reference radiation, and a second polarizing filter arranged in the optical radiation beam prior to said impinging thereof on the surface, wherein the first and second polarizing filter are configured for polarizing the optical radiation beam in a polarization direction at an angle with one of said at least two orthogonal polarization directions of the birefringent phase mask.

14. Optical detection system according to claim 12 or 13, wherein the polarizing filter or polarizing filters have an orientation such that the angle of the polarization direction provided relative to said one of the at least two orthogonal polarization directions of the birefringent phase mask is between π/8 radians and 3π/8 radians, preferably between π/6 radians and π/3 radians, more preferably between 8π/36 radians and 10π/36 radians, or even more preferably such that the angle is π/4 radians.

15. Optical detection system according to any of claims 12-14, further comprising a polarizing beam splitter arranged in an optical path after said birefringent phase mask, for splitting the filtered specular reflected portion into said first part and said second part of the specular reflected portion, wherein the polarizing beam splitter is configured for splitting the beam into two orthogonal polarization directions corresponding with said at least two orthogonal polarization directions of the birefringent phase mask.
